Europäisches Patentamt

European Patent Office

Office européen des brevets

(11) Veröffentlichungsnummer: **0 487 967 B1**

(12) **EUROPÄISCHE PATENTSCHRIFT**

(45) Veröffentlichungstag der Patentschrift: **08.02.95**

(21) Anmeldenummer: **91119260.7**

(22) Anmeldetag: **11.11.91**

(51) Int. Cl.⁶: **B62D 6/00**, //B62D103/00, B62D111/00,B62D101/00, B62D7/15,G05D1/08

(54) **Fahrzeug mit einem Antiblockierregler.**

(30) Priorität: **29.11.90 DE 4038079**

(43) Veröffentlichungstag der Anmeldung:
**03.06.92 Patentblatt 92/23**

(45) Bekanntmachung des Hinweises auf die Patenterteilung:
**08.02.95 Patentblatt 95/06**

(84) Benannte Vertragsstaaten:
**DE FR GB IT**

(56) Entgegenhaltungen:
**EP-A- 0 338 202**
**EP-A- 0 350 019**
**DE-A- 3 826 982**
**GB-A- 2 148 221**
**GB-A- 2 231 542**

(73) Patentinhaber: **ROBERT BOSCH GMBH**
**Postfach 30 02 20**
**D-70442 Stuttgart (DE)**

(72) Erfinder: **Becker, Rolf, Dipl.-Ing.**
**Mozartweg 3**
**W-7257 Ditzingen (DE)**
Erfinder: **Belzner, Ulrich, Dipl.-Ing.**
**Heimbergweg 6**
**W-7141 Schwieberdingen (DE)**
Erfinder: **Mergenthaler, Rolf, Dipl.-Ing.**
**Fontanestrasse 2**
**W-7250 Leonberg (DE)**
Erfinder: **Heess, Gerhard, Dr.-Ing.**
**Stuttgarter Strasse 90**
**W-7146 Tamm (DE)**

## Beschreibung

<u>Stand der Technik</u>

Ein gemäß dem Oberbegriff des Anspruchs 1 ausgerüstetes Fahrzeug ist aus der DE-A-3826982 bekannt. Dort werden die Bremsdrücke an den getrennt geregelten Rädern einer Achse gemessen und deren Differenz $\Delta P$ unter Aussparung einer Totzone bei niedrigem $\Delta P$ zur Gewinnung eines Lenkwinkels $\delta$ = K • $\Delta P$ benutzt. Nach oben ist der Lenkwinkel auf einen Grenzwert begrenzt (Fig. 8A). Es sind auch verschiedene Korrekturmöglichkeiten zur Verbesserung des Lenkwinkelverlaufs in Abhängigkeit von $\Delta P$ vorgesehen (Fig. 8B und 8C), wobei gemäß Fig. 8 eine Korrektur in Abhängigkeit von der Fahrzeuggeschwindigkeit vorgenommen wird.

<u>Vorteile der Erfindung</u>

Die vorliegende Erfindung gemäß Anspruch 1 und Anspruch 9 und die Weiterbildungen gemäß den andern Ansprüchen optimieren die angestrebte Kompensation des Giermoments auf Fahrbahnen mit unterschiedliche Griffigkeit ($\mu$-Split). Die häufig angewandte Giermomentenaufbauverzögerung, die bekanntlich den Bremsweg verlängert, kann bei Anwendung der Kompensation durch einen Lenkeingriff entfallen. Auch ist es nunmehr möglich, statt nach select low geregelten Hinterrädern eine modifizierte Einzelradregelung an den Hinterrädern zu benutzen, wobei das high-Rad bei unterschiedlichem $\mu$ einen höheren Bremsdruck erhält und Gewinn an Bremskraft bringt.

Die Erfindung wird bei Vorhandensein einer Hinterachslenkung dort angewendet, jedoch kann der Kompensationslenkwinkel $\delta$ auch dem Vorderradlenkwinkel überlagert werden. Die Hinterradlenkung kann auch noch für andere Zwecke z.B. Verbesserung des fahrdynamischen Verhaltens zum Einsatz kommen, sodaß auch hier der Kompensationswinkel $\delta$GMK überlagert wird.

Anhand der Zeichnung wird ein Ausführungsbeispiel der Erfindung erläutert.

Es zeigen:

Fig. 1          ein Blockschaltbild einer Kompensationsschaltung

Fig. 2 bis 4     Diagramme.

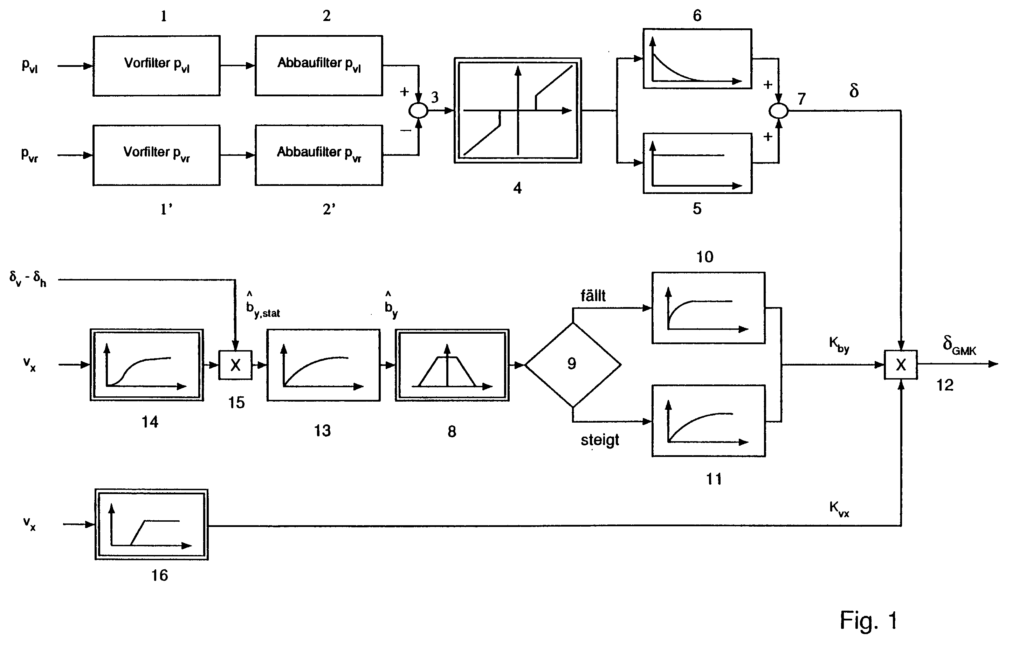

Im vorliegenden Ausführungsbeispiel der Fig. 1, wird auf die Kompensation des Bremsgiermoments durch eine Hinterachslenkung bei select-low gebremster Hinterachse eingegangen.

Die Bremsdrücke in den Vorderrädern liefern in erster Näherung ein Maß für die ausgenutzte Bremskraft, die Differenz $\Delta p$ der Drücke folglich ein Maß für das Bremsgiermoment. Der Hinterachslenkwinkel $\delta$ erzeugt ein entgegengesetztes Moment um die Fahrzeughochachse, welches bei geeigneter Auslegung das Bremsgiermoment kompensiert. Der stationäre Zusammenhang zwischen $\delta$ und $\Delta p$ wird durch den Proportionalitätsfaktor $k_p$ beschrieben.

Da während einer ABS-Bremsung die Bremsdrücke ständig moduliert werden, würde eine Hinterachslenksteuerung mit ausschließlich o.g. Proportionalität sehr unruhig reagieren. Deshalb wird eine Filterung vorgesehen, bevor die Druckdifferenz berechnet wird. Diese Differenz muß erst einmal eine signifikante Schwelle (Totzone) überwinden, bevor die Steuerung aktiv wird; auch diese Maßnahme soll Lenkunruhe bei kleinen Störungen vermeiden.

Die Filterung der gemessenen Bremsdrücke $P_{v1}$ und $P_{vr}$ erfolgt zweistufig.

Im Vorfilter 1 bzw. 1' sollen Störungen durch das Meßrauschen (Peaks, A/D-Fehler) unterdrückt werden, was durch eine variable Begrenzung der Druckänderungsrate erreicht wird. Die Anstiegsbegrenzung bleibt bei häufigem Wechsel von Druckaufbau und -abbau bei kleinen Werten, bei einer Änderung mit gleichem Vorzeichen über einen längeren Zeitraum hinweg wird sie kontinuierlich bis zu einem Maximalwert erhöht.

Die Abbaufilter 2 bzw. 2' sind speziell auf die Zusammenhänge zwischen ABS-Regelzyklen (ABS-Regelzyklen mit Pulsreihen) und Hinterradlenkung ausgerichtet. Damit der Hinterradlenkwinkel den Drucksprüngen insbesondere in den Druckabbauphasen nicht direkt folgt, wird ein Absinken der gefilterten Bremsdrücke beim ersten Druckabbau nach einer Druckanstiegsphase nur sehr langsam zugelassen. Nach Ablauf einer vorgegebenen Zeit (z. B. 100 msek) wird die Zeitkonstante des Tiefpasses umgeschaltet, so daß sich der gefilterte Wert (Ausgang von Block 2 bzw. 2') schneller an die Ausgangsgröße des Vorfilters 1 (1') annähert.

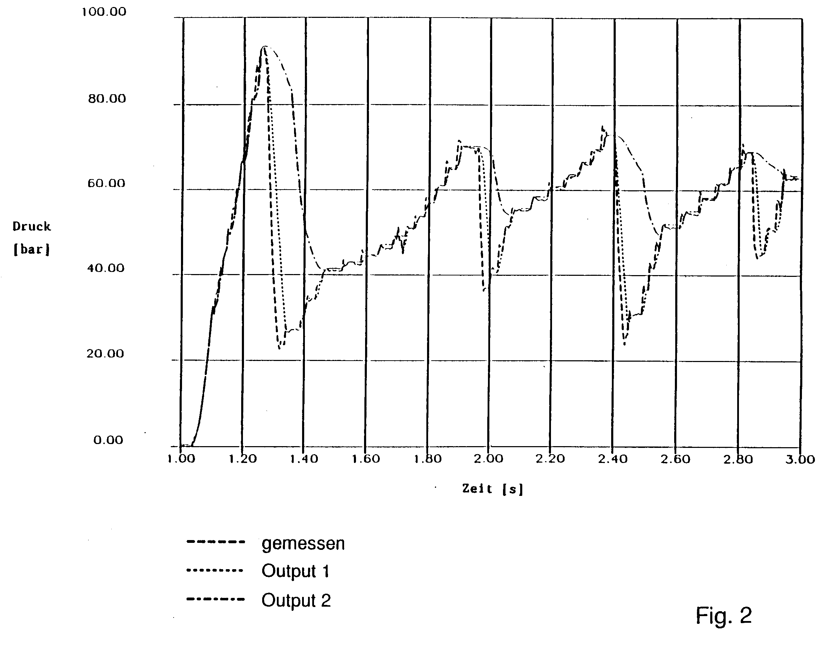

Der gemessene Druck sowie der Zwischenwert und der gefilterte Druck sind in Fig. 2 dargestellt.

Danach wird aus den gefilterten Bremsdrücken $P_{vlf}$ und $P_{vrf}$ in einem Subtrahierer 3 die Differenz der Ausgangsgrößen der Filter 2 bzw. 2' gebildet welche nach Überschreiten einer toten Zone 4 die Eingangsgröße f($\Delta p$) für Steuerungsverstärker 5 und 6 liefert, deren Ausgangssignale im Addierer 7 zum Lenkwinkel $\delta$ summiert werden.

Die Steuerung besteht im wesentlichen aus einem konstanten Anteil

$$\delta_p \ = \ f(\Delta p) \ ^* \ k_p \ \text{(Block 5)}.$$

Durch die Filterung, die tote Zone und die Dynamik des Lenkstellers baut sich zunächst eine Gierbewegung auf, welche auch bei idealer Auslegung der Verstärkung $k_p$ erhalten bleibt. Deshalb wird bei Beginn des Steuereingriffs noch ein zeitvariabler Anteil

$$\delta_v \ = \ f(\Delta p) \ ^* \ k_v \ \text{(Block 6)}$$

Der Faktor $k_v$ wird auf einen bestimmten Wert gesetzt, wenn die Differenz der gefilterten Drücke die tote Zone überschreitet und klingt dann kontinuierlich ab.

Beim Zuschalten der Steuerung wird also der Hinterradlenkwinkel sichtbar überhöht, so daß die Giergeschwindigkeit ihr Vorzeichen wechselt und der Gierwinkel so wieder reduziert wird. Der Fahrer muß in diesem Fall praktisch nicht mehr eingreifen. Über den gesamten Bremsvorgang gesehen nimmt die Giergeschwindigkeit nun sehr kleine Werte an, die Unstetigkeiten durch die ABS-Regelzyklen werden also weitgehend kompensiert.

Sowohl bei kleinen als auch bei hohen Geschwindigkeiten verhindert die Giermomentenkompensation ein Ausbrechen des Fahrzeugs. Mit zunehmender Geschwindigkeit wird die Unterstützung durch sie deutlicher.

Bei Versuchen mit festgehaltenem Lenkrad bleibt der Spurversatz recht klein, ein Gierwinkel baut sich sehr langsam auf.

Wie schon oben gesagt, kann die bisher eingesetzte Messung der vorderen Radbremsdrücke auch durch einen Schätzalgorithmus ersetzt werden. Einer ist in der Patentanmeldung DE-A-4 030 724 beschrieben, die als Anlage beigefügt ist. Die Filterung der Bremsdrücke kann dabei so vereinfacht werden, daß die Blöcke 1, 1' entfallen.

Eine Beeinflussung des Vorderradlenkwinkels ist nach dem gleichen Prinzip möglich. Lediglich quantitative Unterschiede treten auf.

Die Einführung der zeitvariablen Verstärkung bringt bei unterschiedlichem Reibbeiwert auf verschiedenen Fahrzeugseiten wesentliche Vorteile, führt jedoch bei Vollbremsungen in der Kurve zu einem übersteuernden Verhalten des Fahrzeugs. Um diesen Nachteil zu vermeiden, wird die Querbeschleunigung des Fahrzeugs mit herangezogen.

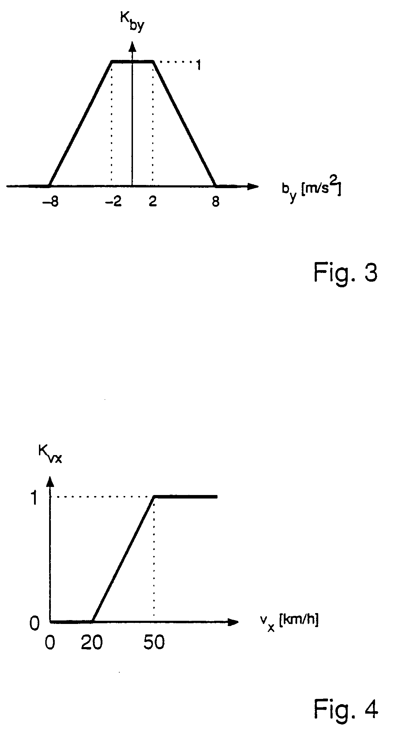

Aus der gemessenen Querbeschleunigung $b_y$ wird zunächst über die in Fig. 3 dargestellte Kennlinie (Block 8) ein Korrekturfaktor $K_{by}$ bestimmt, der multiplikativ mit dem Hinterradlenkwinkel verknüpft wird (in 12).

Diese Kennlinie bewirkt, daß bei geringen Querbeschleunigungen, z.B. kleiner als 2 m/s$^2$ die Kompensation unbeeinflußt bleibt ($K_{by}$ = 1), darüber eine querbeschleunigungsproportionale Abschwächung erfolgt, und bei sehr großen Querbeschleunigung, z.B. oberhalb von 8 m/s$^2$ die Kompensation vollständig unterdrückt wird ($K_{by}$ = O). Dieser Kennlinie liegt die Kenntnis zugrunde, daß bei μ-Split-Bremsungen die auftretenden Querbeschleunigungen sich ungefähr in dem Bereich ±2 m/s$^2$ bewegen.

Diese Kennlinie allein ist nicht ausreichend. Schwankungen der Querbeschleunigung bei Werten $| \, b_y \, | >$ 2 m/s$^2$ (z.B. Vorzeichenwechsel von $b_y$ beim gebremsten Spurwechsel) führen zu proportionalen Schwankungen des Korrekturfaktors und somit des Hinterradlenkwinkels, die als Unruhe spürbar sind. Nachteilig kommt dazu, daß diese Lenkwinkelschwankungen sich wiederum auf das $b_y$-Signal auswirken. Eine geeignete Filterung des Korrekturfaktors ist daher notwendig. Sie muß aber gewährleisten, daß beim Aufbau einer Querbeschleunigung eine Abschwächung der GMK schnell erfolgt, jedoch bei bestimmter Fahrmanövern, z.B. Spurwechsel, nicht zu schnell wieder eingegriffen wird. Dies erreicht man mit zwei alternativen Tiefpässen 10 und 11 mit stark unterschiedlicher Zeitkonstante. Die querbeschleunigungsabhängige Lenkwinkelkorrektur hat damit die in Fig. 1 in den Blöcken 8, 9, 10 und 11 dargestellte Form.

Typische Werte für die Zeitkonstanten der beiden alternativen Tiefpässe sind 10 ms bzw. 1000 ms.

Die Blöcke 9, 10 und 11 sollen folgenden Sachverhalt symbolisieren. Steigt die Querbeschleunigung und wird $K_{by}$ kleiner so wird der Tiefpaß 10 mit der kleinen Zeitkonstante wirksam, d.h. der Ausgangswert $K_{by}$ folgt dem Eingang aus Block 8 schnell und verkleinert den Lenkwinkel. Nimmt dagegen die Querbeschleunigung ab und damit $K_{by}$ zu, so folgt $K_{by}$ dem Eingangswert aus Block 8 nur verzögert.

Mit diesen Maßnahmen wird eine Abschwächung der Giermomentenkompensation bei Kurvenbremsungen und gebremsten Spurwechseln auf hohen Reibwerten erreicht. Die verbleibenden Anteile des Hinterradlenkwinkels $\delta$GMK aus der Kompensation wirken sich nicht mehr nachteilig auf das Fahrverhalten aus.

Man kann die gemessene Querbeschleunigung durch eine aus den Lenkwinkeln und der Fahrzeuggeschwindigkeit (z.B. Tachosignal) nachgebildeten Größe ersetzen. Aus dem bekannten linearen Einspurmodell kann bei stationärer Betrachtung folgender Zusammenhang für die Querbeschleunigung hergeleitet werden:

$$\breve{b}_{y,stat} = \frac{V_x^2 \cdot (\delta_v - \delta_h)}{l_o} \cdot \frac{1}{1 + (V_x/V_{ch})^2} \qquad (1)$$

mit

| | |
|---|---|
| $V_x$ | - Fahrzeuglängsgeschwindigkeit |
| $\delta_v$ | - Vorderradlenkwinkel |
| $\delta_h$ | - Hinterradlenkwinkel |
| $l_o$ | - Radstand |
| $V_{ch}$ | - charakterische Geschwindigkeit |
| $\breve{b}_{y,stat}$ | - geschätzte stationäre Beschleunigung |

Dabei setzt sich $V_{ch}$ aus den Modellparametern wie folgt zusammen:

$$V_{ch} = \sqrt{\frac{1}{\frac{m}{l_o^2} \cdot \left\{ \frac{l_h}{c_v} - \frac{l_v}{c_h} \right\}}} \qquad (2)$$

mit

| | |
|---|---|
| $m$ | - Fahrzeugmasse |
| $l_v$ | - Abstand Schwerpunkt - Vorderachse |
| $l_h$ | - Abstand Schwerpunkt - Hinterachse |
| $c_v$ | - Schräglaufsteifigkeit Vorderachse |
| $c_h$ | - Schräglaufsteifikgeit Hinterachse |

Mit den Parametern eines bestimmten Modells ergibt sich hieraus ein Wert für $V_{ch}$ von ca. 20 m/s.

Bei instationärem Fahrmanöver (gebremster Spurwechsel) zeigt sich, daß die auf Kreisfahrt abgestimmte stationäre Gleichung (1) zu hohe Querbeschleunigungen liefert. Aus diesem Grund wird ein dynamisches Glied (Tiefpaß mit Zeitkonstante $T_{bys}$) nachgeschaltet (Block 13), welches die Fahrzeugdynamik berücksichtigt.

Bei der Realisierung von Gleichung (1) im Rechner bietet es sich an, den Anteil

$$\frac{V_x^2}{l_o} \cdot \frac{1}{1 + (V_x/V_{ch})^2} \qquad (3)$$

als geschwindigkeitsabhängige Kennlinie abzulegen (Block 14). Gleichung (1) reduziert sich damit auf die Interpolation einer Kennlinie (in Block 14) sowie die Multiplikation des Ergebnisses mit der Differenz $(\delta_v - \delta_h)$ (in Block 15). Die gesamte Querbeschleunigungskorrektur hat damit die im mittlerem Zweig in Fig. 1 dargestellte Form.

In der Schätzung der Querbeschleunigung ist, wie oben dargestellt, der Hinterradlenkwinkel $\delta_h$ als Eingangsgröße enthalten. Gleichzeitig wirkt die Schätzung auf einen Teil des Hinterradlenkwinkels, nämlich den GMK-Anteil, zurück. Damit hierbei keine Rückkopplungseffekte auftreten können, wird als Eingangsgröße der Querbeschleunigungsschätzung lediglich der aus sonstiger Hinterradlenk-Steuerung stammende Anteil des Hinterradlenkwinkels berücksichtigt.

4

Zur Unterdrückung des verstärkten Eindrehens am Ende einer Kurvenbremsung durch die Giermomentenkompensation wird ein von der Fahrzeuggeschwindigkeit abhängiger Verstärkungsfaktor $K_{VX}$ multiplikativ überlagert.

Dessen beispielhafter Verlauf ist im Block 16 abgespeichert und in Fig. 4 dargestellt. Oberhalb z. B. von 50 km/h bleibt der Verstärkungsfaktor unverändert auf Eins und im Bereich von z. B. 50 km/h bis 20 km/h wird er kontinuierlich auf Null abgebaut. Diese Maßnahme ist für $\mu$-Split-Bremsungen von untergeordneter Bedeutung, da Fahrzeuge mit ABS im unteren Geschwindigkeitsbereich keine Beherrschbarkeitsprobleme zeigen.

Dieser zusätzliche Faktor $K_{VX}$ wird im Multiplizierer 12 multiplikativ berücksichtigt. Der Lenkwinkel für die Giermomentenkompensation lautet somit insagesamt:

$$\delta_{GMK} = K_{by} \bullet K_{VX} \bullet \delta.$$

**Patentansprüche**

1. Mit einem Antiblockierregler ausgerüstetes Kraftfahrzeug mit Einzelradregelung wenigstens an einer Achse, bei dem das bei unterschiedlichem Reibbeiwert $\mu$ auf den beiden Fahrzeugseiten bei ABS-Regelung auftretende Giermoment zumindest teilweise dadurch kompensiert wird, daß ein von der Differenz $\Delta P$ der getrennt eingeregelten Bremsdrücke abhängiger Kompensation-Lenkwinkel $\delta$ am Hinterradlenksystem eingestellt, bzw. dem Vorderrad- oder Hinterradlenkwinkel überlagert wird, wobei die Abhängigkeit des Lenkwinkels $\delta$ von der Differenz $\Delta P$ in einem vorgegebenen Bereich kleiner Bremsdruckdifferenzen 0 ist (Totzone) und danach auf einen vorgegebenen Wert anwächst, dadurch gekennzeichnet, daß die Regelverstärkung jeweils nach Überschreiten der Totzone einen vorgegebenen konstanten Wert annimmt und daß zum Zeitpunkt des Überschreitens der Totzone der konstanten Reglerverstärkung ein vorgegebener höherer Wert additiv überlagert wird, der nach einer vorgegebenen Zeitfunktion auf Null erniedrigt wird.

2. Fahrzeug nach Anspruch 1, dadurch gekennzeichnet, daß der Verlauf der Abnahme gemäß einem expomentiellen Verlauf erfolgt.

3. Fahrzeug nach Anspruch 1 oder 2, dadurch gekennzeichnet, daß die Bremsdrücke gemessen werden.

4. Fahrzeug nach Anspruch 1 oder 2, dadurch gekennzeichnet, daß die Bremsdrücke durch einen Schätzalgorithmus mit den Ausgangsdaten der ABS-Ventilansteuerzeiten geschätzt wird.

5. Fahrzeug nach einem der Ansprüche 1 bis 4, dadurch gekennzeichnet, daß die Radbremsdrücke in einem Abbaufilter derart gefiltert werden, daß der gefilterte Bremsdruck dem dem Filter zugeführten Eingangswert bei fallendem Bremsdruck in einer Anfangsphase nicht oder nur in geringem Maße folgt und daß erst danach eine kontinuierliche Annäherung an den Eingangswert erfolgt.

6. Fahrzeug nach Anspruch 5, dadurch gekennzeichnet, daß dem Abbaufilter ein weiteres Filter vorgeschaltet ist, das eine variable Begrenzung des Anstiegs des Ausgangswerts mit dem Eingangswert beinhaltet, wobei die Begrenzung von einem vorgegebenen Ausgangswert ausgehend bis auf einen maximalen Wert erhöht wird, wenn eine vorzeichengleiche Änderung des Eingangswerts über eine Zeitspanne anhält.

7. Fahrzeug nach einem der Ansprüche 1 bis 6, dadurch gekennzeichnet, daß der ermittelte Lenkwinkel $\delta$ mit einem von der Fahrzeuggeschwindigkeit abhängigen Korrektfaktor $K_{VX}$ beaufschlagt wird, der bei kleinen Geschwindigkeiten 0 ist, dann auf 1 anwächst.

8. Fahrzeug nach einem der Ansprüche 1 bis 7, dadurch gekennzeichnet, daß die Querbeschleunigung $b_y$ des Fahrzeugs ermittelt wird, daß in Abhängigkeit von der Querbeschleunigung $b_y$ in einer Korrektureinrichtung ein Korrekturfaktor ermittelt wird, der im Bereich kleiner Querbeschleunigung eins ist, und sich mit steigendem ($b_y$) kontinuierlich auf null verkleinert und daß der Kompensationslenkwinkel $\delta$ mit diesem Korrekturfaktor beaufschlagt wird.

9. Fahrzeug nach Anspruch 8, dadurch gekennzeichnet, daß der Korrektureinrichtung eine Filtereinrichtung nachgeschaltet ist, deren Ausgangsgröße $K_{by}$ der Eingangsgröße bei abnehmender Ausgangsgrö-

5

ße $K_{by}$ schnell folgt und bei zunehmender Ausgangsgröße vergleichsweise langsam folgt, und daß der Lenkwinkel δ mit der Ausgangsgröße $K_{by}$ (gefilterter Korrekturfaktor/beaufschlagt wird.

**10.** Fahrzeug nach Anspruch 8 oder 9, dadurch gekennzeichnet, daß die Querbeschleunigung gemessen wird.

**11.** Fahrzeug nach Anspruch 8 oder 9, dadurch gekennzeichnet, daß die Querbeschleunigung $\overline{b}y$ aus dem Lenkwinkel oder der Differenz der Lenkwinkel und der Fahrzeuggeschwindigkeit sowie Konstanten geschätzt wird.

**12.** Fahrzeug nach Anspruch 11, dadurch gekennzeichnet, daß der geschätzte Wert über einen Tiefpaß geführt wird.

**Claims**

**1.** Motor vehicle which is equipped with an anti-lock controller and has individual wheel control at least on one axle and in which the yawing moment which occurs with ABS control with different coefficients of friction μ on the two sides of the vehicle is at least partially compensated by the fact that a compensation steering angle δ which is dependent on the difference ΔP between the separately controlled brake pressures is obtained at the rear-wheel steering system or superimposed on the front-wheel steering angle or rear-wheel steering angle, the dependence of the steering angle δ on the difference ΔP in a predetermined range of small brake pressure differences being 0 (dead zone) and subsequently increasing to a predetermined value, characterized in that the control amplification assumes a predetermined constant value whenever the dead zone is exceeded, and in that a predetermined, higher value which is reduced to zero in accordance with a predetermined time function is additively superimposed at the time that the dead zone of the constant controller amplification is exceeded.

**2.** Vehicle according to Claim 1, characterized in that the progression of the reduction occurs according to an exponential characteristic.

**3.** Vehicle according to Claim 1 or 2, characterized in that the brake pressures are measured.

**4.** Vehicle according to Claim 1 or 2, characterized in that the brake pressures are estimated by an estimation algorithm with the output data of the ABS valve actuation times.

**5.** Vehicle according to one of Claims 1 to 4, characterized in that the wheel brake pressures are filtered in a reduction filter in such a way that in an initial phase the filtered brake pressure does not follow, or only follows to a small degree, the input value fed to the filter in the case of decreasing brake pressure, and in that a continuous approximation to the input value only occurs after this.

**6.** Vehicle according to Claim 5, characterized in that a further filter which contains a variable limitation of the rise of the output value with the input value is connected upstream of the reduction filter, the limitation being increased starting from a predetermined output value to a maximum value when a change, with the same sign, of the input value continues for a time period.

**7.** Vehicle according to one of Claims 1 to 6, characterized in that the detected steering angle δ is acted on by a correction factor $K_{VX}$ which is dependent on the speed of the vehicle and is 0 at small speeds and then increases to 1.

**8.** Vehicle according to one of Claims 1 to 7, characterized in that the lateral acceleration $b_y$ of the vehicle is detected, in that a correction factor is detected as a function of the lateral acceleration $b_y$ ina correction device, the said correction factor being one in the region of small lateral acceleration and reducing continuously to zero with increasing ($b_y$), and in that the compensation steering angle δ is acted on by this correction factor.

**9.** Vehicle according to Claim 8, characterized in that the correction device has connected downstream of it a filter device whose output variable $K_{by}$ quickly follows the input variable when the output variable

$K_{by}$ is decreasing and follows it comparatively slowly when the output variable is increasing, and in that the steering angle $\delta$ is acted on by the output variable $K_{by}$ (filtered correction factor).

10. Vehicle according to Claim 8 or 9, characterized in that the lateral acceleration is measured.

11. Vehicle according to Claim 8 or 9, characterized in that the lateral acceleration $b_y$ is estimated from the steering angle or the difference between the steering angles and the vehicle speed, as well as constants.

12. Vehicle according to Claim 11, characterized in that the estimated value is fed via a lowpass filter.

## Revendications

1. Dans un véhicule à moteur équipé d'une commande anti-blocage des roues avec une régulation de chaque roue au moins sur un essieu, dans le cas duquel le couple d'embardée qui se produit , en cas de régulation ABS dans le cas de coefficients différents de frottement $\mu$ sur les deux côtés du véhicule, est compensé au moins en partie grâce au fait que l'on règle l'angle de braquage $\delta$ sur le système de braquage des roues arrière qui sert à la compensation en fonction de la différence $\Delta P$ des pressions de freinage réglées séparément, ou on le superpose à l'angle de braquage des roues avant ou des roues arrière, la fonction de l'angle de braquage $\delta$ de la différence $\Delta P$ dans une zone prédéfinie de petites différences de pression de freinage étant nulle (zone morte) et ensuite l'angle croissant pour atteindre une valeur prédéfinie, véhicule caractérisé en ce que l'amplification du réglage prend après dépassement de la zone morte une valeur constante prédéfinie et en ce qu'à l'instant du dépassement de la zone morte de l'amplification constante du réglage, on superpose une valeur prédéfinie plus élevée de façon additive, qui est ramenée à zéro après un fonctionnement prédéfini dans le temps.

2. Véhicule selon la revendication 1, caractérisé en ce que l'évolution de la décroissance suit un parcours exponentiel.

3. Véhicule selon la revendication 1 ou 2, caractérisé en ce qu'on mesure les pressions de freinage.

4. Véhicule selon la revendication 1 ou 3, caractérisé en ce que les pressions de freinage sont estimées au moyen d'un algorithme d'estimation avec les données de sortie des temps de commande des vannes du système ABS.

5. Véhicule selon l'une des revendications 1 à 4, caractérisé en ce que les pressions de freinage des roues sont filtrées dans un filtre de réduction de telle façon que la pression de freinage filtrée ne suive pas la valeur d'entrée amenée au filtre en cas de chute de la pression de freinage dans une phase initiale ou ne la suive que dans une faible mesure et qu'ensuite il y ait une approche continue de la valeur d'entrée.

6. Véhicule selon la revendication 5, caractérisé en ce que l'on monte en avant du filtre de réduction un autre filtre, qui conserve une limitation variable de la croissance de la valeur de sortie avec la valeur d'entrée, la limitation augmentant en partant d'une valeur de départ prédéfinie jusqu'à une valeur maximale quand une variation de même signe de la valeur d'entrée se maintient sur une certaine période de temps.

7. Véhicule selon l'une des revendications 1 à 6, caractérisé en ce que l'angle de braquage détecté $\delta$ est affecté d'un coefficient de correction $K_{VX}$ fonction de la vitesse du véhicule, qui est nul dans le cas de vitesses faibles et croît ensuite jusqu'à 1.

8. Véhicule selon l'une des revendications 1 à 7, caractérisé en ce que l'on détecte l'accélération transversale by du véhicule, on détermine en fonction de l'accélération transversale $b_y$ un facteur de correction dans un dispositif de correction qui est égal à un dans la zone des petites accélérations transversales et se réduit de façon continue à zéro quand l'accélération transversale ($b_y$) augmente et en ce que l'on affecte l'angle de braquage de compensation $\delta$ de ce facteur de correction.

**9.** Véhicule selon la revendication 8, caractérisé en ce qu'en aval du dispositif de correction, on monte un dispositif de filtrage, dont la grandeur de sortie $K_{by}$ suit rapidement la grandeur d'entrée quand la grandeur de sortie $K_{by}$ décroît et la suit lentement de manière comparable quand la grandeur de sortie croît et en ce que l'angle de braquage $\delta$ est sollicité par la grandeur de sortie $K_{by}$ (coefficient filtré de correction).

**10.** Véhicule selon la revendication 8 ou 9, caractérisé en ce que l'on mesure l'accélération transversale.

**11.** Véhicule selon la revendication 8 ou 9, caractérisé en ce que l'on estime l'accélération transversale $b_y$ à partir de l'angle de braquage ou de la différence de l'angle de braquage et de la vitesse du véhicule ainsi que de constantes.

**12.** Véhicule selon la revendication 11, caractérisé en ce que l'on fait passer la valeur estimée par un filtre passe-bas.

Fig. 1

Fig. 2

EP 0 487 967 B1

Fig. 3

Fig. 4